# EUROPÄISCHE PATENTSCHRIFT

(11) **EP 4 045 439 B1**
(45) Veröffentlichungstag und Bekanntmachung des Hinweises auf die Patenterteilung: **04.12.2024**
(21) Anmeldenummer: 20781505.1
(22) Anmeldetag: 28.09.2020
(51) Int. Cl.: B65G 47/248

(54) **WECHSELSYSTEM FÜR BEHÄLTERELEMENT-WENDEVORRICHTUNGEN**
CHANGING SYSTEM FOR CONTAINER-ELEMENT TURNING DEVICES
SYSTÈME DE CHANGEMENT POUR DISPOSITIFS DE RETOURNEMENT D'ÉLÉMENTS DE CONTENANT

(30) Priorität: 15.10.2019 DE 102019127712
(43) Veröffentlichungstag der Anmeldung: 24.08.2022
(73) Patentinhaber: Krones AG, 93073 Neutraubling (DE)
(72) Erfinder: DEMEL, Alexander, 93073 Neutraubling (DE); HOLZER, Christian, 93073 Neutraubling (DE); BINDER, Arthur, 93073 Neutraubling (DE)
(74) Vertreter: Grünecker Patent- und Rechtsanwälte PartG mbB
(86) Internationale Anmeldenummer: PCT/EP2020/077120
(87) Internationale Veröffentlichungsnummer: WO 2021/073857

(56) Entgegenhaltungen:
- EP-A1- 3 045 410
- DE-U1- 202013 007 104
- US-B2- 7 617 921

## Beschreibung

### Gebiet der Erfindung

Die Erfindung betrifft ein Wechselsystem für Behälterelement-Wendevorrichtungen und ein entsprechendes Verfahren für eine Behälterelement-Transportvorrichtung zum Transport von Behälterelementen.

### Stand der Technik

Wie beispielsweise in der WO 2017/125201 A1 der Anmelderin beschrieben, sind sogenannte Wendevorrichtungen bekannt, mit denen Behälter (z.B. Dosen) um eine senkrecht zur Symmetrieachse verlaufenden Ache gedreht werden können. In der getränkeverarbeitenden Industrie kann eine solche Drehung für unterschiedliche Behandlungsschritte von Behältern erforderlich sein. Dazu gehören zum Beispiel die Reinigung des Innenraums der Behälter, zum Ablaufen eines Reinigungsmediums oder auch für eine Beschriftung des Behälterbodens.

Die Wendevorrichtungen können insbesondere durch ein sogenanntes "generatives Fertigungsverfahren" hergestellt werden, bei dem die Fertigung eines oder mehrerer Objekte direkt auf der Basis rechnerinterner Datenmodelle aus formlosem (Flüssigkeiten, Pulver u. ä.) oder formneutralem (band-, drahtförmig) Material mittels chemischer und/oder physikalischer Prozesse erfolgt. Für das generative Fertigungsverfahren kann beispielsweise ein 3D-Druck durchgeführt werden.

EP 3 045 410 A1 betrifft eine Vorrichtung gemäß dem Oberbegriff des Anspruchs 1, zum Transportieren und Wenden von Stückgut, mit wenigstens einer Wendeeinrichtung mit einem Führungskanal, in welchem die seriell zugeführten Stückgüter in einer ersten Lage eingeführt und unter Veränderung ihrer Lage in einer Transportrichtung durchgeführt werden, und mit einer sich in Transportrichtung an die Wendeeinrichtung anschließenden Transporteinrichtung mit einem Transportkanal, in dem die Stückgüter in ihrer zweiten Lage linear weiter transportiert werden. Um mit der Vorrichtung ohne Umrüstung unterschiedliche Stückgüter verarbeiten zu können, ist vorgesehen, dass die Form und/oder der Durchmesser des Führungskanals sowie die Form und/oder der Durchmesser des Transportkanals aneinander anpassbar sind.

Im Stand der Technik sind so genannte Freilauf- und Drängelwender bekannt. Freilaufwender weisen ein Gefälle auf, so dass die Behälter durch deren Gewichtskraft in Verbindung mit der Kontaktierung durch die Vorrichtung gedreht werden. Drängelwender weisen kein Gefälle auf, und die Drehung der Behälter erfolgt hier aufgrund des Staudrucks der nachfolgenden Behälter.

Aktuell muss ein Bediener bei einer Formatumstellung z.B. in einer Dosenlinie den Dosenwender manuell per Hand wechseln. Hierzu muss ein evtl. vorhandener Schutz entfernt, der Dosenwender gelöst (abgeschraubt) und abgebaut, der nächste Dosenwender aufgesetzt und wieder per Arretierung/Verriegelung befestigt werden. Zuletzt muss der evtl. vorhandene Schutz wieder platziert werden.

Es wird deshalb Bedienpersonal für diese manuellen Prozesse benötigt, um den Wechselvorgang durchzuführen, was angesichts einer Wandlung zur Automatisierung nachteilig ist. Weiterhin sind die Kosten einer Verriegelungsvorrichtung bei aktuellen eingesetzten Wendern hoch.

### Beschreibung der Erfindung

Aufgabe der Erfindung ist es, die oben genannten Nachteile zumindest teilweise zu mildern oder zu beseitigen.

Die Aufgabe wird gelöst durch ein erfindungsgemäßes Wechselsystem nach Patentanspruch 1.

Das erfindungsgemäße Wechselsystem für Behälterelement-Wendevorrichtungen umfasst: eine Behälterelement-Transportvorrichtung zum Transport von Behälterelementen; eine Mehrzahl von Wendevorrichtungen für Behälterelemente, wobei jede Wendevorrichtung einen Führungskanal mit einer Einlaufseite und einer Auslaufseite umfasst, wobei ein Behälterelement beim Durchlaufen des Führungskanals von der Einlaufseite zu der Auslaufseite von einer ersten Ausrichtungslage in eine davon verschiedene zweite Ausrichtungslage bewegbar ist, und wobei jede Wendevorrichtung in einen Transportweg der Behälterelement-Transportvorrichtung einspannbar ist; und eine Einspanneinrichtung zum automatisierten Einspannen einer Wendevorrichtung aus der Mehrzahl von Wendevorrichtungen in den Transportweg der Behälterelement-Transportvorrichtung.

Das erfindungsgemäße Wechselsystem hat den Vorteil, dass der Bewegungsablauf bei einem Wechsel der Wendevorrichtung ohne manuellen Eingriff durch Bedienpersonal durchgeführt werden kann, beispielsweise von einem Roboter durchgeführt werden kann, und kein weiteres Werkzeug erforderlich ist.

In Sinne der vorliegenden Anmeldung können die Behälterelemente beispielsweise Flaschen, Dosen, Vorformlinge für PET-Flaschen, Behälter aus Karton, Deckel, oder Verschlüsse sein.

Die Einspanneinrichtung weist ein erstes Verbindungselement an der Behälterelement-Transportvorrichtung und ein jeweiliges zweites Verbindungselement an jeder Wendevorrichtung auf, wobei das erste und das zweite Verbindungselement miteinander in Eingriff bringbar sind. Mittels der beiden Verbindungselemente kann die Wendevorrichtung an der Behälterelement-Transportvorrichtung einfach befestigt werden, indem das erste und das zweite Verbindungselement miteinander in Eingriff gebracht werden / miteinander gekoppelt werden. Dies stellt eine einfach und kostengünstige Realisierung dar, die für ein automatisiertes Einspannen geeignet ist.

Zudem weist die Einspanneinrichtung ein drittes Verbindungselement an der Behälterelement-Transportvorrichtung und ein jeweiliges viertes Verbindungselement an jeder Wendevorrichtung auf, wobei das dritte und das vierte Verbindungselement miteinander in Eingriff bringbar sind, und wobei das zweite Verbindungselement einlaufseitig und das vierte Verbindungselement auslaufseitig vorgesehen ist. Somit ergibt sich eine sichere Befestigung entlang des gesamten Transportwegs.

Jedes zweite und jedes vierte Verbindungselement umfasst einen Vorsprung der jeweiligen Wendevorrichtung und das erste und das dritte Verbindungselement umfassen eine Aufnahme, insbesondere einen Aufnahmeschuh, für den Vorsprung des zweiten bzw. vierten Verbindungselements. Der jeweilige Vorsprung lässt sich in die jeweilige Aufnahme einführen. Dadurch wird eine Beschränkung der Bewegung der Wendevorrichtung bzw. eine Fixierung senkrecht zur Transportrichtung bereitgestellt.

Die Aufnahme des ersten Verbindungselements umfasst ein Federelement, mit dem auf die Wendevorrichtung eine Federkraft von der Einlaufseite in Richtung der Auslaufseite ausübbar ist, wobei vorzugsweise der Eingriff des dritten Verbindungselements mit dem vierten Verbindungselement ungefedert ist. Die Druckkraft der gefederten Aufnahme wirkt somit stets in Flussrichtung der Dosen. Dadurch kann die maximale notwendige Druckkraft zum Einspannen der Wendevorrichtung relativ gering gehalten werden.

Mit dem Federelement des ersten Verbindungselements kann eine Kraft auf den Vorsprung des zweiten Verbindungselements ausgeübt werden, insbesondere mit einem an dem Federelement angeordneten Druckstück.

Eine andere Weiterbildung besteht darin, dass jede Wendevorrichtung als 3D-Druckteil ausgebildet ist und/oder jede Wendevorrichtung einen zum Eingriff mit einer Robotereinrichtung geeigneten Abschnitt aufweist.

Die Mehrzahl der Wendevorrichtungen können für jeweils verschiedenartige Behälterelemente vorgesehen sein, insbesondere für Behälter mit verschiedenen Abmessungen, wobei die Behälter insbesondere Getränkedosen sind.

Das Wechselsystem kann weiterhin eine Robotervorrichtung umfassen, die zum Wechseln, insbesondere zum automatischen Wechseln, der Wendevorrichtungen bei einem Wechsel der Art oder Größe der mit der Behälterelement-Transportvorrichtung zu transportierenden Behälterelemente ausgebildet ist.

Die oben genannte Aufgabe wird weiterhin gelöst durch ein Verfahren nach Anspruch 6.

Das erfindungsgemäße Verfahren für eine Behälterelement-Transportvorrichtung zum Transport von Behälterelementen umfasst die Schritte: Bereitstellen einer Mehrzahl von Wendevorrichtungen für Behälterelemente, wobei jede Wendevorrichtung einen Führungskanal mit einer Einlaufseite und einer Auslaufseite umfasst, wobei ein Behälterelement beim Durchlaufen des Führungskanals von der Einlaufseite zu der Auslaufseite von einer ersten Ausrichtungslage in eine davon verschiedene zweite Ausrichtungslage bewegbar ist, und wobei jede Wendevorrichtung in einen Transportweg der Behälterelement-Transportvorrichtung einsetzbar ist; und automatisiertes Einspannen einer Wendevorrichtung aus der Mehrzahl von Wendevorrichtungen in die Behälterelement-Transportvorrichtung mit einer Einspanneinrichtung.

Die Vorteile des erfindungsgemäßen Verfahrens bzw. dessen nachfolgen genannten Weiterbildungen entsprechen jenen, die in Bezug auf die erfindungsgemäße Vorrichtung bzw. dessen Weiterbildungen beschrieben wurden, und es wird daher auf die diesbezüglichen obigen Ausführungen verwiesen.

Die Einspanneinrichtung weist ein erstes Verbindungselement an der Behälterelement-Transportvorrichtung und ein jeweiliges zweites Verbindungselement an jeder Wendevorrichtung auf, wobei das erste und das zweite Verbindungselement miteinander in Eingriff bringbar sind, wobei die Einspanneinrichtung ein drittes Verbindungselement an der Behälterelement-Transportvorrichtung und ein jeweiliges viertes Verbindungselement an jeder Wendevorrichtung aufweisen kann, wobei das dritte und das vierte Verbindungselement miteinander in Eingriff bringbar sind, und wobei das zweite Verbindungselement einlaufseitig und das vierte Verbindungselement auslaufseitig vorgesehen ist, und wobei der Schritt des Einspannens ein erstes In-Eingriff-Bringen des ersten und zweiten Verbindungselements und ein zweites In-Eingriff-Bringen des dritten und vierten Verbindungselements umfasst.

Jedes zweite und jedes vierte Verbindungselement umfassen einen Vorsprung der jeweiligen Wendevorrichtung und das erste und das dritte Verbindungselement umfassen eine jeweilige Aufnahme, insbesondere einen jeweiligen Aufnahmeschuh, für den Vorsprung des zweiten bzw. vierten Verbindungselements, wobei die Aufnahme des ersten Verbindungselements ein Federelement umfasst, mit dem auf die Wendevorrichtung eine Federkraft von der Einlaufseite in Richtung der Auslaufseite ausübbar ist, wobei vorzugsweise der Eingriff des dritten Verbindungselements mit dem vierten Verbindungselement ungefedert ist, und wobei mit dem Federelement des ersten Verbindungselements eine Kraft auf den Vorsprung des zweiten Verbindungselements ausübbar ist, insbesondere mit einem an dem Federelement angeordneten Druckstück, wobei das erste In-Eingriff-Bringen umfasst: Einführen des Vorsprungs des zweiten Verbindungselements in die Aufnahme des ersten Verbindungselements und, sobald der Vorsprung des zweiten Verbindungselements am Druckstück in dessen Ausgangsposition anliegt, Spannen des Federelements; wobei der folgende weitere Schritt vorgesehen ist: Positionieren des Vorsprungs des vierten Verbindungselements gegenüber der Aufnahme des dritten Verbindungselements, nachdem das Druckstück hinreichend in die Aufnahme des ersten Verbindungselements hineingedrückt wurde; und wobei das zweite In-Eingriff-Bringen umfasst: Einführen des Vorsprungs des vierten Verbindungselements in die Aufnahme des dritten Verbindungselements bis zum einem Anschlag, wobei sich das Druckstück dabei nicht mehr vollständig in die Ausgangsposition zurückbewegt, wodurch eine dauerhafte Spannkraft auf die Wendevorrichtung wirkt.

Das automatisierte Einspannen kann mit Hilfe einer Robotereinrichtung erfolgen.

Das Verfahren kann den weiteren Schritt des Ausspannens der Wendevorrichtung, insbesondere mit der Robotereinrichtung umfassen.

Die Bewegung der Wendevorrichtung zum Ausspannen kann dabei in umgekehrter Reihenfolge der Bewegung der Wendevorrichtung zum Einspannen erfolgen.

Die Wendevorrichtung kann mittels einem fahrerlosem Transportfahrzeug (Automated Guided Vehicle, AGV) angeliefert werden.

Weitere Merkmale und beispielhafte Ausführungsformen sowie Vorteile der vorliegenden Erfindung werden nachfolgend anhand der Zeichnung näher erläutert. Es versteht sich, dass diese Ausführungsform nicht den gesamten Bereich der vorliegenden Erfindung erschöpfen kann. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform des erfindungsgemäßen Wechselsystems.
- Fig. 2: zeigt einen Satz von Wendevorrichtungen für das in Fig. 1 gezeigte Wechselsystem.
- Fig. 3: zeigt einen gefederten Aufnahmeschuh für das in Fig. 1 gezeigte Wechselsystem mit dem in Fig. 2 gezeigten Satz von Wendevorrichtungen.

### Ausführungsformen

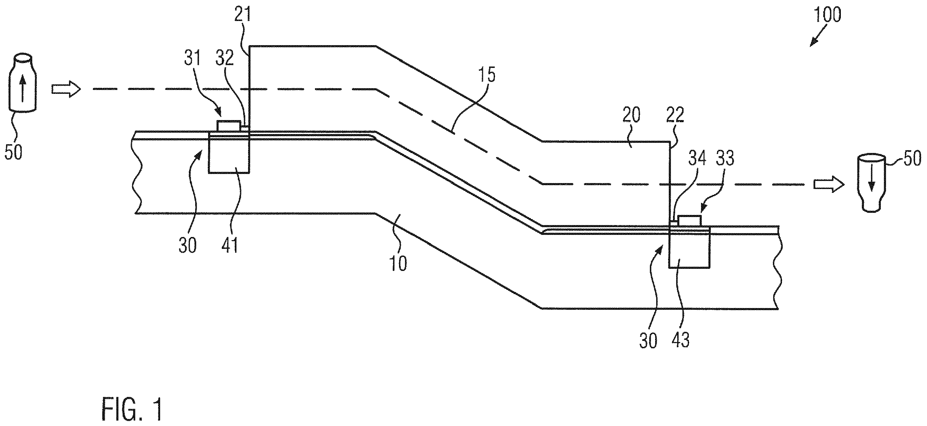

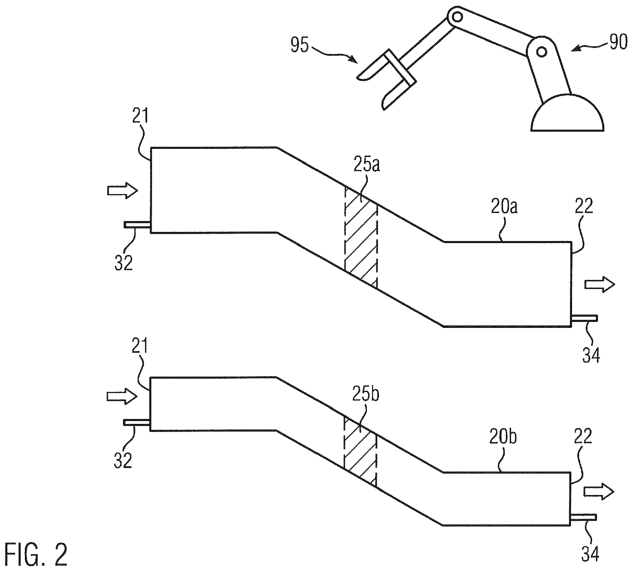

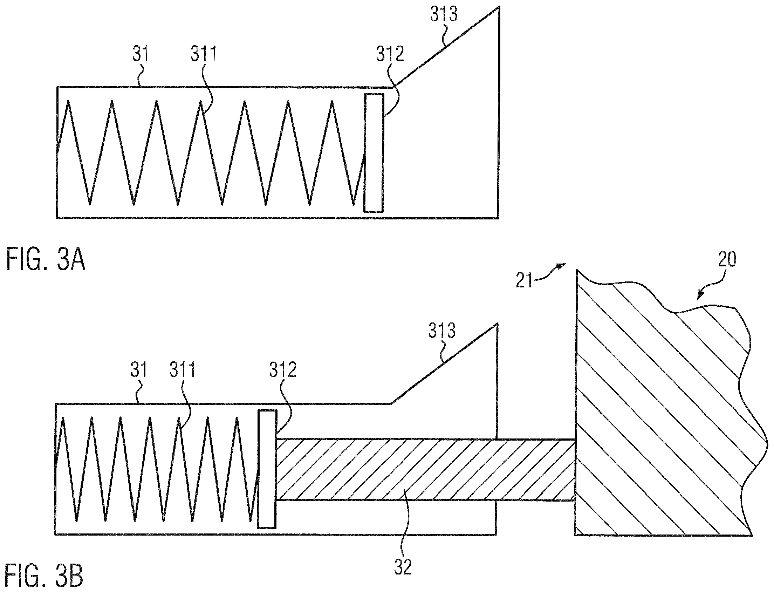

Figuren 1 bis 3 zeigen eine Ausführungsform des erfindungsgemäßen Wechselsystems, die im Folgenden beschrieben wird.

Das erfindungsgemäße Wechselsystem 100 für Behälterelement-Wendevorrichtungen umfasst: eine Behälterelement-Transportvorrichtung 10 zum Transport von Behälterelementen 50; eine Mehrzahl von Wendevorrichtungen 20, 20a, 20b für Behälterelemente 50, wobei jede Wendevorrichtung 20, 20a, 20b einen Führungskanal mit einer Einlaufseite 21 und einer Auslaufseite 22 umfasst, wobei ein Behälterelement 50 beim Durchlaufen des Führungskanals von der Einlaufseite 21 zu der Auslaufseite 22 von einer ersten Ausrichtungslage in eine davon verschiedene zweite Ausrichtungslage bewegbar ist, und wobei jede Wendevorrichtung 20, 20a, 20b in einen Transportweg 15 der Behälterelement-Transportvorrichtung einspannbar ist; und eine Einspanneinrichtung 30 zum automatisierten Einspannen einer Wendevorrichtung 20 aus der Mehrzahl von Wendevorrichtungen 20, 20a, 20b in den Transportweg der Behälterelement-Transportvorrichtung 10.

Die Einspanneinrichtung 30 weist ein erstes Verbindungselement 31 an der Behälterelement-Transportvorrichtung 10 und ein jeweiliges zweites Verbindungselement 32 an jeder Wendevorrichtung 20, 20a, 20b auf, wobei das erste und das zweite Verbindungselement 31, 32 miteinander in Eingriff bringbar sind. Mittels der beiden Verbindungselemente 31, 32 kann die Wendevorrichtung 20 an der Behälterelement-Transportvorrichtung 10 einfach befestigt/ eingespannt werden, indem das erste und das zweite Verbindungselement 31, 32 miteinander in Eingriff gebracht werden / miteinander gekoppelt werden.

Zudem weist die Einspanneinrichtung 30 ein drittes Verbindungselement 33 an der Behälterelement-Transportvorrichtung 10 und ein jeweiliges viertes Verbindungselement 34 an jeder Wendevorrichtung 20, 20a, 20b auf, wobei das dritte und das vierte Verbindungselement 33, 34 miteinander in Eingriff bringbar sind, und wobei das zweite Verbindungselement 32 einlaufseitig und das vierte Verbindungselement 34 auslaufseitig vorgesehen ist. Somit ergibt sich eine sichere Befestigung entlang des gesamten Transportwegs 15.

Jedes zweite und jedes vierte Verbindungselement 32, 34 umfassen einen Vorsprung 32, 34 der jeweiligen Wendevorrichtung, und das erste und das dritte Verbindungselement umfassen einen Aufnahmeschuh 31, 33 für den Vorsprung 32, 34 des zweiten bzw. vierten Verbindungselements 32, 34. Die Aufnahmeschuhe 31, 33 sind beispielsweise mit einem jeweiligen Befestigungswinkel 41, 43 an der Behälterelement-Transportvorrichtung 10 befestigt, z.B. verschraubt. Der Aufnahmeschuh 31 des ersten Verbindungselements weist zur Öffnung hin eine Aufweitung 313 auf, um das Einspannen der Wendevorrichtung überhaupt zu ermöglichen. Zusätzlich erleichtert die Aufweitung 313 noch das Einführen des Vorsprungs 31.

Die Aufnahme 31 des ersten Verbindungselements 31 umfasst ein Federelement 311, mit dem auf die Wendevorrichtung 20 eine Federkraft von der Einlaufseite 21 in Richtung der Auslaufseite 22 ausgeübt wird, wobei der Eingriff des dritten Verbindungselements mit dem vierten Verbindungselement ungefedert ist. Mit dem Federelement 311 des ersten Verbindungselements 31 kann über das an dem Federelement 311 angeordnete Druckstück 312 eine Kraft auf den Vorsprung 32 des zweiten Verbindungselements 32 ausgeübt werden. Es ist zwar möglich, auch die Aufnahme 33 des dritten Verbindungselements 33 gefedert auszubilden, jedoch sollte dann die Federkraft entgegen der Laufrichtung der Behälterelemente 50 geringer sein als die Federkraft in Laufrichtung, so dass ein fester Anschlag der Wendevorrichtung 20 mit der Transportvorrichtung (z.B. mit der Aufnahme 33) in Laufrichtung erfolgt, um im Betrieb der Transportvorrichtung 10 Lageveränderungen / Schwingungen der Wendevorrichtung 20 in Laufrichtung bzw. entgegengesetzt dazu zu vermeiden.

Jede Wendevorrichtung 20, 20a, 20b ist als 3D-Druckteil ausgebildet. Weiterhin weist jede Wendevorrichtung 20, 20a, 20b einen zum Eingriff mit einer Robotereinrichtung 90 geeigneten Abschnitt 25a, 25b auf. Dabei kann z.B. ein Greifarm 95 der Robotereinrichtung 90 den Abschnitt 25a, 25b ergreifen und fixieren. Die Robotereinrichtung 90 ist zum automatischen Wechseln der Wendevorrichtungen 20, 20a, 20b einem Wechsel der Art oder Größe der mit der Behälterelement-Transportvorrichtung 10 zu transportierenden Behälterelemente 50 ausgebildet ist.

In diesem Ausführungsbeispiel ist die Wendevorrichtung 20, 20a, 20b als Freilaufwender ausgebildet. Jedoch ist die Erfindung nicht darauf beschränkt und lässt sich unmittelbar auch auf Drängelwender übertragen. Lediglich der Führungskanal ist bei Drängelwendern geradlinig ausgebildet.

Die Mehrzahl der Wendevorrichtungen 20, 20a, 20b ist für jeweils verschiedenartige Behälterelemente 50 vorgesehen, beispielsweise für Dosen mit verschiedenen Abmessungen.

Das erfindungsgemäße Verfahren für eine Behälterelement-Transportvorrichtung zum Transport von Behälterelementen 50 umfasst in dieser Ausführungsform die Schritte: Bereitstellen der Mehrzahl von Wendevorrichtungen 20, 20a, 20b für Behälterelemente 50, wobei der Schritt des Einspannens ein erstes In-Eingriff-Bringen des ersten und zweiten Verbindungselements 31, 32 und ein zweites In-Eingriff-Bringen des dritten und vierten Verbindungselements 33, 34 umfasst.

Das erste In-Eingriff-Bringen umfasst: Einführen des Vorsprungs 32 des zweiten Verbindungselements 32 in die Aufnahme 31 des ersten Verbindungselements 31 und, sobald der Vorsprung 32 des zweiten Verbindungselements 32 am Druckstück 312 in dessen Ausgangsposition anliegt, Spannen des Federelements 311; wobei der folgende weitere Schritt vorgesehen ist: Positionieren des Vorsprungs 34 des vierten Verbindungselements 34 gegenüber der Aufnahme 33 des dritten Verbindungselements 33, nachdem das Druckstück 312 hinreichend in die Aufnahme 31 des ersten Verbindungselements 31 hineingedrückt wurde; und wobei das zweite In-Eingriff-Bringen umfasst: Einführen des Vorsprungs 34 des vierten Verbindungselements 34 in die Aufnahme 33 des dritten Verbindungselements 33 bis zum einem Anschlag, wobei sich das Druckstück 312 dabei nicht mehr vollständig in die Ausgangsposition zurückbewegt, wodurch eine dauerhafte Spannkraft auf die Wendevorrichtung 20 wirkt.

Die wichtigsten Eigenschaften am Beispiel eines Dosenwenders sind nachfolgend nochmals kurz zusammengefasst. Die Wendevorrichtung in Form eines Dosenwenders wird als 3D-Druck Teil gefertigt. Hierbei werden Aufnahmen verwendet, welche sich für einen automatisierten Prozess sehr gut eignen. Als einlaufseitige Aufnahme des Dosenwenders kommt ein gefederter Aufnahmeschuh, welcher fest an der Transportvorrichtung verschraubt ist, zum Einsatz. Die Federung erzeugt eine Kraft, welche den Dosenwender in den auslaufseitigen Aufnahmeschuh drückt. Dadurch sitzt der Dosenwender fest in den Aufnahmen. Der gefederte Aufnahmeschuh ist fest an der Transportvorrichtung einlaufseitig des Dosenwenders verschraubt. In der auslaufseitigen Aufnahme ist kein Federmechanismus verbaut.

Das Einsetzen erfolgt mittels der folgenden Schritte. Schritt 1: Der Dosenwender muss schräg nach unten gehaltert in die einlaufseitige gefederte Aufnahme eingeführt werden. Sobald die Aufnahmelasche/Vorsprung des Dosenwenders am Druckstück anliegt, wird die Druckfeder gespannt. Schritt 2: Nachdem das Druckstück weit genug in die Aufnahme hineingedrückt ist, kann der Dosenwender nach unten bewegt werden. Schritt 3: Nun kann der Dosenwender in die auslaufseitige Aufnahme bewegt werden. Das Druckstück wandert dabei nicht mehr vollständig in die Ausgangsposition zurück, wodurch eine stetige Spannkraft auf den Dosenwender wirkt. Dadurch ist der Dosenwender fest eingespannt.

Wichtig ist dabei, dass die Druckkraft der gefederten Aufnahme stets in Flussrichtung der Dosen wirkt. Dadurch kann die maximale Druckkraft relativ geringgehalten werden, da die Feder nicht der von den Dosen auf den Wender verursachten Kraft entgegenwirken muss. Der Ausspannvorgang des Dosenwenders funktioniert analog entgegengesetzt. Da für den Ein- und Ausspannvorgang keinerlei Arretierung o.ä. gelöst oder gespannt werden müssen, kann dieser Bewegungsablauf sehr leicht automatisiert werden und z.B. von einem Roboter getätigt werden.

Der Dosenwender kann beispielsweise mittels fahrerlosem Transportfahrzeug (Automated Guided Vehicle, AGV) angeliefert werden, und dann wird der aktuell eingespannte Dosenwender durch den angelieferten ersetzt. Der Austausch kann von einem Roboter durchgeführt werden.

Die dargestellten Ausführungsformen sind lediglich beispielhaft und der vollständige Umfang der vorliegenden Erfindung wird durch die Ansprüche definiert.

## Patentansprüche

1. Wechselsystem (100) für Wendevorrichtungen für eine Behälterelement-Transportvorrichtung (10), umfassend:
eine Behälterelement-Transportvorrichtung (10) zum Transport von Behälterelementen (50);
eine Mehrzahl von Wendevorrichtungen (20, 20a, 20b) für Behälterelemente (50), wobei jede Wendevorrichtung einen Führungskanal mit einer Einlaufseite (21) und einer Auslaufseite (22) umfasst, wobei ein Behälterelement (50) beim Durchlaufen des Führungskanals von der Einlaufseite zu der Auslaufseite von einer ersten Ausrichtungslage in eine davon verschiedene zweite Ausrichtungslage bewegbar ist, und wobei jede Wendevorrichtung in einen Transportweg (15) der Behälterelement-Transportvorrichtung einspannbar ist; und
eine Einspanneinrichtung (30) zum automatisierten Einspannen einer Wendevorrichtung (20) aus der Mehrzahl von Wendevorrichtungen (20, 20a, 20b) in den Transportweg (15) der Behälterelement-Transportvorrichtung (10);
wobei die Einspanneinrichtung ein erstes Verbindungselement (31) an der Behälterelement-Transportvorrichtung und ein jeweiliges zweites Verbindungselement (32) an jeder Wendevorrichtung aufweist, wobei das erste und das zweite Verbindungselement miteinander in Eingriff bringbar sind; und
wobei die Einspanneinrichtung ein drittes Verbindungselement (33) an der Behälterelement-Transportvorrichtung und ein jeweiliges viertes Verbindungselement (34) an jeder Wendevorrichtung aufweist, wobei das dritte und das vierte Verbindungselement miteinander in Eingriff bringbar sind, und wobei das zweite Verbindungselement einlaufseitig und das vierte Verbindungselement auslaufseitig vorgesehen ist;
jedes zweite und jedes vierte Verbindungselement einen Vorsprung (32, 34) der jeweiligen Wendevorrichtung umfassen und das erste und das dritte Verbindungselement eine Aufnahme (31, 33), insbesondere einen Aufnahmeschuh, für den Vorsprung des zweiten bzw. vierten Verbindungselements umfassen;
**dadurch gekennzeichnet, dass**
die Aufnahme des ersten Verbindungselements ein Federelement (311) umfasst, mit dem auf die Wendevorrichtung eine Federkraft von der Einlaufseite in Richtung der Auslaufseite ausübbar ist.

2. Wechselsystem nach Anspruch 1, wobei mit dem Federelement des ersten Verbindungselements eine Kraft auf den Vorsprung des zweiten Verbindungselements ausübbar ist, insbesondere mit einem an dem Federelement angeordneten Druckstück (312).

3. Wechselsystem nach Anspruch 1 oder 2, wobei jede Wendevorrichtung als 3D-Druckteil ausgebildet ist und/oder wobei jede Wendevorrichtung einen zum Eingriff mit einer Robotereinrichtung geeigneten Abschnitt aufweist.

4. Wechselsystem nach einem der Ansprüche 1 bis 3, wobei die Mehrzahl der Wendevorrichtungen für jeweils verschiedenartige Behälterelemente vorgesehen sind, insbesondere für Behälter mit verschiedenen Abmessungen, wobei die Behälter insbesondere Getränkedosen sind.

5. Wechselsystem nach einem der Ansprüche 1 bis 4, weiterhin eine Robotervorrichtung (90) umfassend, die zum Wechseln, insbesondere zum automatischen Wechseln, der Wendevorrichtungen bei einem Wechsel der Art oder Größe der mit der Behälterelement-Transportvorrichtung zu transportierenden Behälterelemente ausgebildet ist.

6. Verfahren für eine Behälterelement-Transportvorrichtung (10) zum Transport von Behälterelementen (50), umfassend die Schritte:
Bereitstellen einer Mehrzahl von Wendevorrichtungen (20, 20a, 20b) für Behälterelemente (50), wobei jede Wendevorrichtung einen Führungskanal mit einer Einlaufseite (21) und einer Auslaufseite (22) umfasst, wobei ein Behälterelement (50) beim Durchlaufen des Führungskanals von der Einlaufseite zu der Auslaufseite von einer ersten Ausrichtungslage in eine davon verschiedene zweite Ausrichtungslage bewegbar ist, und wobei jede Wendevorrichtung in einen Transportweg (15) der Behälterelement-Transportvorrichtung einsetzbar ist; und
automatisiertes Einspannen einer Wendevorrichtung (20) aus der Mehrzahl von Wendevorrichtungen (20, 20a, 20b) in die Behälterelement-Transportvorrichtung mit einer Einspanneinrichtung (30);
wobei die Einspanneinrichtung ein erstes Verbindungselement (31) an der Behälterelement-Transportvorrichtung und ein jeweiliges zweites Verbindungselement (32) an jeder Wendevorrichtung aufweist, wobei das erste und das zweite Verbindungselement miteinander in Eingriff bringbar sind, wobei die Einspanneinrichtung ein drittes Verbindungselement (33) an der Behälterelement-Transportvorrichtung und ein jeweiliges viertes Verbindungselement (34) an jeder Wendevorrichtung aufweist, wobei das dritte und das vierte Verbindungselement miteinander in Eingriff bringbar sind, und wobei das zweite Verbindungselement einlaufseitig und das vierte Verbindungselement auslaufseitig vorgesehen ist, und wobei der Schritt des Einspannens ein erstes In-Eingriff-Bringen des ersten und zweiten Verbindungselements und ein zweites In-Eingriff-Bringen des dritten und vierten Verbindungselements umfasst;
**dadurch gekennzeichnet, dass**
jedes zweite und jedes vierte Verbindungselement einen Vorsprung (32, 34) der jeweiligen Wendevorrichtung umfassen und das erste und das dritte Verbindungselement eine jeweilige Aufnahme (31, 33), insbesondere einen jeweiligen Aufnahmeschuh, für den Vorsprung des zweiten bzw. vierten Verbindungselements umfassen, wobei die Aufnahme des ersten Verbindungselements ein Federelement (311) umfasst, mit dem auf die Wendevorrichtung eine Federkraft von der Einlaufseite in Richtung der Auslaufseite ausübbar ist, und wobei mit dem Federelement des ersten Verbindungselements eine Kraft auf den Vorsprung des zweiten Verbindungselements ausübbar ist, insbesondere mit einem an dem Federelement (311) angeordneten Druckstück (312),
wobei das erste In-Eingriff-Bringen umfasst: Einführen des Vorsprungs (32) des zweiten Verbindungselements in die Aufnahme (31) des ersten Verbindungselements und, sobald der Vorsprung (32) des zweiten Verbindungselements am Federelement (311), insbesondere am Druckstück (312), in deren bzw. dessen Ausgangsposition anliegt, Spannen des Federelements;
wobei der folgende weitere Schritt vorgesehen ist: Positionieren des Vorsprungs (34) des vierten Verbindungselements gegenüber der Aufnahme (33) des dritten Verbindungselements, nachdem das Druckstück hinreichend in die Aufnahme des ersten Verbindungselements hineingedrückt wurde; und
wobei das zweite In-Eingriff-Bringen umfasst: Einführen des Vorsprungs (34) des vierten Verbindungselements in die Aufnahme (34) des dritten Verbindungselements bis zum einem Anschlag, wobei sich das Federelement, insbesondere das Druckstück, dabei nicht mehr vollständig in die Ausgangsposition zurückbewegt, wodurch eine dauerhafte Spannkraft auf die Wendevorrichtung (20) wirkt.

7. Verfahren nach Anspruch 6, wobei das automatisierte Einspannen mit einer Robotereinrichtung erfolgt.

8. Verfahren nach einem der Ansprüche 6 bis 7, umfassend den weiteren Schritt:
Ausspannen der Wendevorrichtung (20), insbesondere mit der Robotereinrichtung (90).

9. Verfahren nach Anspruch 8, wobei die Bewegung der Wendevorrichtung zum Ausspannen in umgekehrter Reihenfolge der Bewegung der Wendevorrichtung zum Einspannen erfolgt.

## Claims

1. A changing system (100) for turnover apparatuses for a container element transporting apparatus (10) comprising:
a container element transporting apparatus (10) for transporting container elements (50);
a plurality of turnover apparatuses (20, 20a, 20b) for container elements (50), wherein each turnover apparatus comprises a guiding channel including an inlet side (21) and an outlet side (22) wherein a container element (50) when passing through the guiding channel from the inlet side to the outlet side can be moved from a first alignment position to a second alignment position differing therefrom and wherein each turnover apparatus can be clamped in a transport path (15) of the container element transporting apparatus; and
a clamping device (30) for automated clamping of one turnover apparatus (20) among the plurality of turnover apparatuses (20, 20a, 20b) in the transport path (15) of the container element transporting apparatus (10);
wherein the clamping device includes a first connecting element (31) at the container element transporting device as well as a respective second connecting element (32) at each turnover apparatus, wherein the first and second connecting elements can be brought into engagement with each other; and
wherein the clamping device includes a third connecting element (33) at the container element transporting device as well as a respective fourth connecting element (34) at each turnover apparatus, wherein the third and fourth connecting elements can be brought into engagement with each other, and wherein the second connecting element is provided at the inlet side and the fourth connecting element is provided at the outlet side;
each second and each fourth connecting element comprise a projection (32, 34) of the respective turnover apparatus and the first and third connecting elements comprise a receptacle (31, 33), in particular a receiving shoe, for the projection of the second and the fourth connecting element, respectively;
**characterized in that**
the receptacle of the first connecting element comprises a spring element (311) for applying a spring force to the turnover apparatus from the inlet side towards the outlet side.

2. The changing system according to claim 1, wherein by means of the spring element of the first connecting element a force can be applied to the projection of the second connecting element, in particular by means of a thrust piece (312) arranged on the spring element.

3. The changing system according to claims 1 or 2, wherein each turnover apparatus is configured as a 3D-printed part and/or wherein each turnover apparatus includes a portion suitable for engagement with a robot device.

4. The changing system according to any one of claims 1 to 3, wherein the plurality of turnover apparatuses are each provided for different container elements, in particular for containers with different dimensions, and wherein the containers are in particular beverage cans.

5. The changing system according to claims 1 to 4, further comprising a robot device (90) configured for automated exchanging the turnover devices when changing the type and size of the container elements to be transported by means of the container element transporting apparatus.

6. A method for a container element transporting device (10) for transporting container elements (50) comprising the following steps:
providing a plurality of turnover apparatuses (20, 20a, 20b) for container elements (50), wherein each turnover apparatus comprises a guiding channel including an inlet side (21) and an outlet side (22), wherein a container element (50), when passing through the guiding channel from the inlet side to the outlet side, can be moved from a first alignment position to a second alignment position differing therefrom, wherein each turnover apparatus can be clamped in a transport path (15) of the container element transporting apparatus; and
automated clamping of one turnover apparatus (20) among the plurality of turnover apparatuses (20, 20a, 20b) in the container element transporting apparatus by means of a clamping device (30);
wherein the clamping device includes a first connecting element (31) at the container element transporting device as well as a respective second connecting element (32) at each turnover apparatus, wherein the first and second connecting elements can be brought into engagement with each other; wherein the clamping device includes a third connecting element (33) at the container element transporting device as well as a respective fourth connecting element (34) at each turnover apparatus, wherein the third and fourth connecting elements can be brought into engagement with each other, and wherein the second connecting element is provided at the inlet side and the fourth connecting element is provided at the outlet side and wherein the step of clamping includes a first sub-step of making the first and second connecting elements engage with each other and a second sub-step of making the third and fourth connecting elements engage with each other;
**characterized in that**
every second and every fourth connecting element comprise a projection (32, 30) of the respective turnover apparatus and the first and the third connecting elements comprise a respective receptacle (31, 33), in particular a respective receiving shoe, for the projection of the second and fourth connecting element, respectively, wherein the receptacle of the first connecting element comprises a spring element (311) for applying a spring force to the turnover apparatus from the inlet side towards the outlet side, and wherein by means of the spring element of a first connecting element a force can be applied to the projection of the second connecting element, in particular by means of a thrust piece (312) arranged on the spring element (311),
wherein the first engaging step comprises: introducing the projection (32) of the second connecting element into the receptacle (31) of the first connecting element and loading the spring element as soon as the projection (32) of the second connecting element abuts against the spring element (311), in particular against the thrust piece (312) in the initial position thereof;
wherein the following further step is provided: positioning the projection (34) of the fourth connecting element in opposition to the receptacle (33) of the third connecting element after the first piece has been sufficiently pushed into the receptacle of the first connecting elements; and
wherein the second engaging step comprises: introducing the projection (34) of the fourth connecting element into the receptacle (34) of the third connecting element up to a stop, wherein the spring element, in particular the thrust piece, does not completely return to the initial position thereof thus exerting a permanent biasing force on the turnover apparatus (20).

7. The method according to claim 6, wherein the automated clamping is carried out by a robot device.

8. The method according to any one of claims 6 to 7, further comprising the following step:
unclamping the turnover apparatus (20), in particular by means of the robot device (90).

9. The method according to claim 8, wherein movement of the turnover apparatus for unclamping is carried out in reverse order of the movement of the turnover apparatus for clamping.

## Revendications

1. Système de changement (100) pour des dispositifs de retournement destinés à un dispositif de transport d'éléments de contenant (10), comprenant :
un dispositif de transport d'éléments de contenant (10) permettant de transporter des éléments de contenant (50) ;
une pluralité de dispositifs de retournement (20, 20a, 20b) destinés à des éléments de contenant (50), dans lequel chaque dispositif de retournement comprend un canal de guidage avec un côté d'entrée (21) et un côté de sortie (22), dans lequel un élément de contenant (50) peut être déplacé d'une première situation d'orientation jusque dans une seconde situation d'orientation différente à l'occasion de la traversée du canal de guidage du côté d'entrée jusqu'au côté de sortie, et dans lequel chaque dispositif de retournement peut être arrimé au sein d'un chemin de transport (15) du dispositif de transport d'éléments de contenant ; et
un dispositif d'arrimage (30) permettant d'arrimer de manière automatisée un dispositif de retournement (20) issu de la pluralité de dispositifs de retournement (20, 20a, 20b) au sein du chemin de transport (15) du dispositif de transport d'éléments de contenant (10) ;
dans lequel le dispositif d'arrimage comprend un premier élément de liaison (31) au niveau du dispositif de transport d'éléments de contenant et un deuxième élément de liaison (32) respectif au niveau de chaque dispositif de retournement, dans lequel les premier et deuxième éléments de liaison peuvent être mis en prise l'un avec l'autre ; et
dans lequel le dispositif d'arrimage présente un troisième élément de liaison (33) au niveau du dispositif de transport d'éléments de contenant et un quatrième élément de liaison (34) respectif au niveau de chaque dispositif de retournement, dans lequel les troisième et quatrième éléments de liaison peuvent être mis en prise l'un avec l'autre, et dans lequel le deuxième élément de liaison est fourni côté entrée et le quatrième élément de liaison est fourni côté sortie ;
chaque deuxième et chaque quatrième élément de liaison comprennent une partie saillante (32, 34) du dispositif de retournement respectif et les premier et troisième éléments de liaison comprennent un dispositif d'accueil (31, 33), en particulier un sabot d'accueil, destiné à la partie saillante des deuxième et quatrième éléments de liaison ;
**caractérisé en ce que**
le dispositif d'accueil du premier élément de liaison comprend un élément élastique (311) avec lequel une force de ressort peut être exercée sur le dispositif de retournement du côté d'entrée vers le côté de sortie.

2. Système de changement selon la revendication 1, dans lequel une force peut être exercée sur la partie saillante du deuxième élément de liaison par l'élément élastique du premier élément de liaison, en particulier par une pièce de pression (312) agencée au niveau de l'élément élastique.

3. Système de changement selon la revendication 1 ou 2, dans lequel chaque dispositif de retournement est réalisé sous la forme d'une pièce imprimée en 3D et/ou dans lequel chaque dispositif de retournement présente une section appropriée pour une mise en prise avec un dispositif robotique.

4. Système de changement selon l'une quelconque des revendications 1 à 3, dans lequel la pluralité de dispositifs de retournement sont prévus pour des éléments de contenants de types respectivement différents, en particulier pour des contenants de différentes dimensions, dans lequel les contenants sont en particulier des canettes de boisson.

5. Système de changement selon l'une quelconque des revendications 1 à 4, comprenant en outre un dispositif robotique (90) conçu pour changer, en particulier pour changer automatiquement, les dispositifs de retournement lors d'un changement du type ou de la taille des éléments de contenant à transporter avec le dispositif de transport d'éléments de contenant.

6. Procédé pour un dispositif de transport d'éléments de contenant (10) permettant de transporter des éléments de contenant (50), comprenant les étapes consistant à :
fournir une pluralité de dispositifs de retournement (20, 20a, 20b) destinés à des éléments de contenant (50), dans lequel chaque dispositif de retournement comprend un canal de guidage avec un côté d'entrée (21) et un côté de sortie (22), dans lequel un élément de contenant (50) peut être déplacé d'une première situation d'orientation jusque dans une deuxième situation d'orientation différente à l'occasion de la traversée du canal de guidage du côté d'entrée jusqu'au côté de sortie, et dans lequel chaque dispositif de retournement peut être inséré au sein d'un chemin de transport (15) du dispositif de transport d'éléments de contenant ; et
arrimer de manière automatisée un dispositif de retournement (20) issu de la pluralité de dispositifs de retournement (20, 20a, 20b) dans le dispositif de transport d'éléments de contenant avec un dispositif d'arrimage (30) ;
dans lequel le dispositif d'arrimage présente un premier élément de liaison (31) au niveau du dispositif de transport d'éléments de contenant et un deuxième élément de liaison (32) respectif au niveau de chaque dispositif de retournement, dans lequel les premier et deuxième éléments de liaison peuvent être mis en prise l'un avec l'autre, dans lequel le dispositif d'arrimage présente un troisième élément de liaison (33) au niveau du dispositif de transport d'éléments de contenant et un quatrième élément de liaison (34) respectif au niveau de chaque dispositif de retournement, dans lequel les troisième et quatrième éléments de liaison peuvent être mis en prise l'un avec l'autre, et dans lequel le deuxième élément de liaison est fourni côté entrée et le quatrième élément de liaison est fourni côté sortie, et dans lequel l'étape d'arrimage comprend les étapes de première mise en prise des premier et deuxième éléments de liaison et de seconde mise en prise des troisième et quatrième éléments de liaison ;
**caractérisé en ce que**
chaque deuxième et chaque quatrième élément de liaison comprennent une partie saillante (32, 34) du dispositif de retournement respectif et les premier et troisième éléments de liaison comprennent un dispositif d'accueil (31, 33) respectif, en particulier un sabot d'accueil respectif, destiné à la partie saillante des deuxième et quatrième éléments de liaison, dans lequel le dispositif d'accueil du premier élément de liaison comprend un élément élastique (311) avec lequel une force de ressort peut être exercée sur le dispositif de retournement du côté d'entrée vers le côté de sortie, et dans lequel une force peut être exercée sur la partie saillante du deuxième élément de liaison par l'élément élastique du premier élément de liaison, en particulier par une pièce de pression (312) agencée au niveau de l'élément élastique (311),
dans lequel la première étape de mise en prise comprend l'étape consistant à :
introduire la partie saillante (32) du deuxième élément de liaison dans le dispositif d'accueil (31) du premier élément de liaison et, dès que la partie saillante (32) du deuxième élément de liaison repose contre l'élément élastique (311), en particulier contre la pièce de pression (312), dans sa position initiale, mettre en tension l'élément élastique ;
dans lequel l'étape supplémentaire ci-dessous est prévue, qui consiste à :
positionner la partie saillante (34) du quatrième élément de liaison par rapport au dispositif d'accueil (33) du troisième élément de liaison après que la pièce de pression a été suffisamment enfoncée dans le dispositif d'accueil du premier élément de liaison ; et
dans lequel la seconde étape de mise en prise comprend l'étape consistant à : introduire la partie saillante (34) du quatrième élément de liaison dans le dispositif d'accueil (34) du troisième élément de liaison jusqu'à une butée, dans lequel l'élément élastique, en particulier la pièce de pression, ne revient plus complètement dans la position initiale, ce qui crée une force d'arrimage permanente sur le dispositif de retournement (20).

7. Procédé selon la revendication 6, dans lequel l'arrimage automatisé s'effectue avec un dispositif robotique.

8. Procédé selon l'une quelconque des revendications 6 à 7, comprenant l'étape supplémentaire consistant à :
désarrimer le dispositif de retournement (20), en particulier avec le dispositif robotique (90).

9. Procédé selon la revendication 8, dans lequel le mouvement du dispositif de retournement permettant de désarrimer est effectué dans l'ordre inverse du mouvement du dispositif de retournement permettant d'arrimer.
